# EUROPEAN PATENT APPLICATION

(11) **EP 2 145 777 A1**
(43) Date of publication of application: **20.01.2010**
(21) Application number: 08799833.2
(22) Date of filing: 10.04.2008
(51) Int. Cl.: B60C 11/16

(54) **TRANSPORT VEHICLE TIRE SPIKE (VARIANTS) AND A SPIKED TIRE**

(30) Priority: 18.04.2007 RU 2007114645
(71) Applicant: Evstifeev, Dmitry Stanislavovich, Moscow 117216 (RU)
(72) Inventor: EVSTIFEEVA, Svetlana Ivanovna, Moscow, 125364 (RU)
(74) Representative: Rupprecht, Kay
(86) International application number: PCT/RU2008/000220
(87) International publication number: WO 2008/130275

(57) **Abstract**

The invention objects are anti-skid spikes (three variants) and a spiked tyre. According to the first variant, the spike comprises a housing with a flange and a tip made in the form of a plate. The housing and the tip are made as a single whole from a hard-alloyed material. At least the tip has the arc-shaped cross-section. According to the second variant, the spike housing, at least in the upper part, is made flattened, hollow and has a closed figure in its cross-section. The tip itself has the shape of a bent plate with the cross-section corresponding to the housing cavity cross-section and is fixed at the housing end with partial deepening into the above-mentioned cavity. According to the third variant, the tip plate has the arc-shaped cross-section; wherein the plate is fixed at the housing end with partial deepening inside the housing. The inventive tyre is provided with anti-skid spikes, each of which has a housing with a flange and a hard-alloyed tip made in the form of a plate. The tip plate has the arc-shaped cross-section. As a result, the operating reliability and safety of vehicles in the winter time gets enhanced.

## Description

### FIELD OF THE INVENTION

The group of inventions relates to automotive industry, namely, to anti-skid devices, and can be used in automobile tyres in order to enhance the traction capability and provide skid-proofing.

The invention objects are an anti-skid spike (three variants) and a spiked tyre.

### BACKGROUND

Most known anti-skid spikes used in vehicle tyres consist, as a rule, of a rod-type housing with a flange as well as a hard-alloyed tip or insert fixed in the housing in the longitudinal direction so that it partially protrudes over the housing end surface. The tip is either pressed or soldered into the spike housing.

Known is a spike having a rod-type housing with a supporting flange and a hard-alloyed rod-type tip fixed on the end part of the housing [application WO 2005/049341, published on 02 June 2005]. Such spikes being installed in the tread part of the tyre have a good traction with the road covered with an ice crust or rolled snow. However during vehicle braking, especially for a vehicle with locked wheels, a linear contact of the tip with the road pavement is carried out in the course of skidding, i.e. the width of the front of influence of the rod-type tip upon the road pavement (upon the ice crust) corresponds to the tip diameter, which defines a low coefficient of sliding friction. Hence, the spikes of such type are insufficiently effective during braking of a vehicle with locked wheels.

As a spike prototype (for all variants), a spike has been chosen [Japanese application No. 63-2707, published on 07 June 1988] with a rod-type cylindrical housing, which has a flange on the one end and on which other end - in the end axial duct - a cylindrical lining is fixed, on which protruding part a plate is fastened being a hard-alloyed tip. The area of spike contact with the surface is determined by the plate cross-sectional area, and, consequently, the coefficient of traction with the road pavement is higher than with spikes having a rod-type tip. However, no matter how the plates may be orientated on the tyre surface, during hard braking with a spontaneous turnaround (full-lock skidding) such a position is possible when the tip plate is orientated longitudinally with respect to the direction of motion. In such situation, poor properties are retained at braking with locked wheels, as it was described above for the rod-type tip. In the other extreme position when during braking the tip plate is orientated perpendicular to the direction of motion, the coefficient of sliding friction grows considerably as a zonal contact is being carried out (the width of the front of influence is determined by the plate width) with the ice crust of the road pavement. However at that the insufficient reliability of spikes is shown as the plates do not have an adequate strength safety. Significant forces influencing during braking leads to the breakdown of the tip plate (bending and shear).

As a prototype for the second object - a tyre with anti-skid spikes - the prototype described above has been selected [Japanese application No. 63-2707, published on 07 June 1988]. All that relates to the critical attitudes with respect to the spikes can be related to the tyres, as the drawbacks during braking in case of glaze ice are mainly determined by the construction of spikes.

### SUMMARY

The object of the invention is to create an anti-skid spike and a tyre provided with spikes ensuring the safety enhancement.

The technical result achievable by the invention is to enhance the tip strength, increase the coefficient of traction with the road pavement and increase of the coefficient of sliding friction during braking with locked wheels.

In the first variant, an anti-skid spike of a vehicle has a housing with a flange and a tip made in the form of plate. The housing and the tip are made as a single whole from a hard-alloyed material. At least the tip has the arc-shaped cross-section. There is possible an implementation, in which the tip is the housing continuation and together they form a single whole plate having the arc-shaped cross-section. It is preferable that the plate cross-section arc should be radial.

In the second variant, an anti-skid spike comprises a housing with a flange and a hard-alloyed tip made in the form of a plate. The housing, at least in the upper part, is made flattened, hollow and has a closed figure in its cross-section, which two opposite sides are the arcs being parallel to each other. The hard-alloyed tip itself has the shape of a bent plate with the cross-section corresponding to the housing cavity cross-section and is fixed at the housing end with partial deepening into the above-mentioned cavity. It is preferable that the two opposite sides of the figure being formed by the cross-section of the upper part of the housing should be concentric radial arcs.

In the third variant, an anti-skid spike comprises a flange, a housing in the form of a rod and a hard-alloyed tip made in the form of a plate. The tip plate has the arc-shaped cross-section; and the plate is fixed at the housing end with partial deepening inside the housing. It is preferable that plate cross-section arc should be radial. The housing rod can have a cross-section being variable over the height.

The inventive tyre is provided with anti-skid spikes, each of which has a housing with a flange and a hard-alloyed tip made in the form of a plate. The housing can have any acceptance shape, for example, as it was described above. At least the tip plate has the arc-shaped cross-section, preferably, with a radial arc. The spikes in the tyre are installed so that the tangent to the tip plate being perpendicular to the longitudinal plane of symmetry of the tip plate is orientated at an angle to the plane being perpendicular to the axis of symmetry of the tyre, and this angle lies within the range of 5°-175°.

It is preferable that these angles should be equal to 45° or 135°.

This application considers a sufficiently thin tip plate, which longitudinal surfaces are parallel to each other, i.e. the plate has the constant thickness. It allows to use the term of "arc" with respect to the plate cross-section, in spite of the fact that, strictly speaking, the arc is the middle longitudinal line of the cross-section. The same relates to the housing walls in the second variant of the spike being claimed.

### BRIEF DESCRIPTION OF THE DRAWINGS

The essence of invention is disclosed in more details in the embodiments given below and is illustrated by figures, on which the following is shown:
Fig. 1 is the construction of spike as per the first variant in the case when the tip and the housing are made in the form of a single whole plate;
Fig. 2 is the construction of spike as per the second variant;
Fig. 3 is the construction of spike as per the third variant;
Fig. 4 is a fragment of the tyre tread with anti-skid spikes, a view in plan;

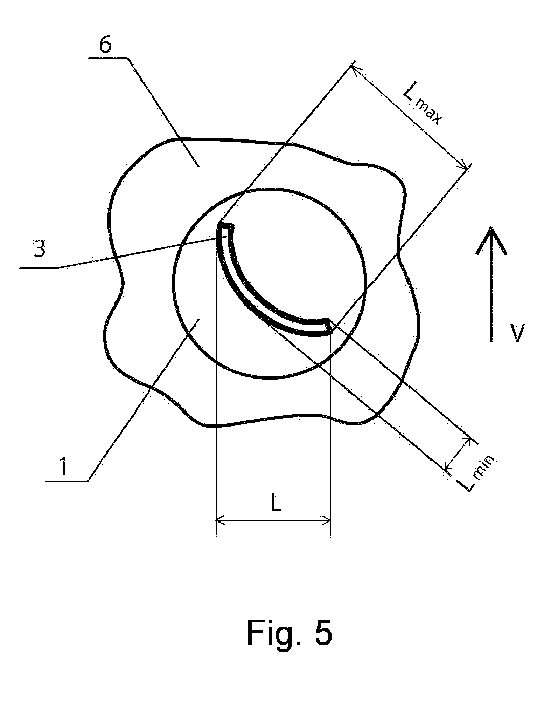

Fig. 5 is a spike on the tyre, a view in plan.

### DETAILED DESCRIPTION

According to the first variant, the anti-skid spike is a single whole (not being assembled) part, i.e. both housing 1 and supporting flange 2 and tip 3 are made from a hard-alloyed material. As such material, any material can be selected, which is conventionally used in anti-skid spike tips (carbides, borides, alloys, steels, metal ceramics, etc.). Supporting flange 2 in this construction, as in other constructions to be described below, can have the shape of a flat ring, disc or plate having any acceptable pattern.

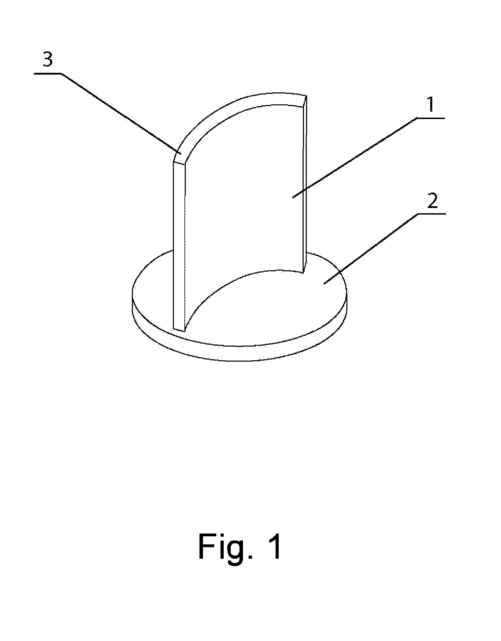

Housing 1 according to the first variant can have any acceptable shape, for example, a cylindrical one. It is preferable, as it is shown in Fig. 1, that tip 1 should be the continuation of housing 2 and together they form a single whole plate having the arc-shaped cross-section. Generally, it is a sector (longitudinal cut) of the surface of ellipsoidal cylinder (straight cylinder, which base is an ellipse). It is preferable that the cross-section arc of the single whole plate should have the radial shape, i.e. the plate surface is a sector of the surface of straight circular cylinder (a cylindrical sector).

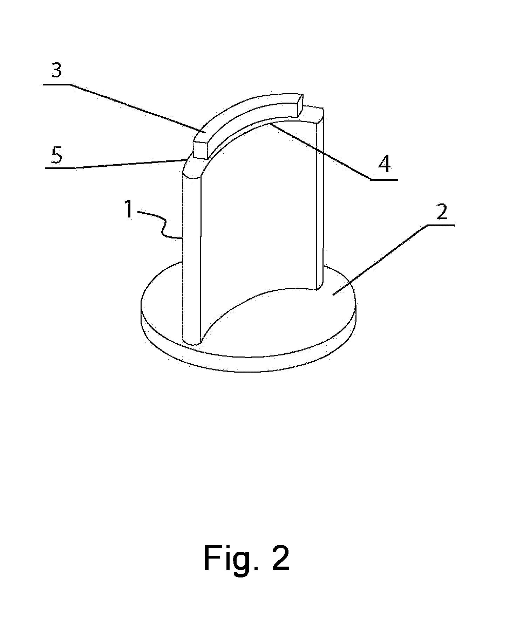

In the second variant of the spike (Fig. 2), only the plate of tip 3 is made of a hard-alloyed material. Housing 1 and flange 2 are made from any acceptable material being used in similar products, for example, from metal, rubber, plastic. Housing 1 on the whole or, which is preferable, in the upper part, is made hollow and flattened. In other words, by shape it is a tube being flattened and bent in the transverse direction. In its cross-section, the housing has a closed convex-concave figure, which two opposite sides are parallel to each other and are combined into a closed contour by means of two short convex arcs. The tip 3 has the shape of a bent plate with the cross-section corresponding to the cross-section of the cavity (a narrow slot being bent in the transverse direction) of housing 1 and is fixed on the end of housing 1 with partial deepening into the above-mentioned cavity. Generally, walls 4, 5 of the housing clamping the base of tip 3 and the tip 3 itself are parallel surfaces of an ellipsoidal cylinder. It is preferable that these arcs should be radial. In such case walls 4, 5 of housing 1, between which tip 2 is clamped and the tip itself should have the surfaces of coaxial cylindrical sectors.

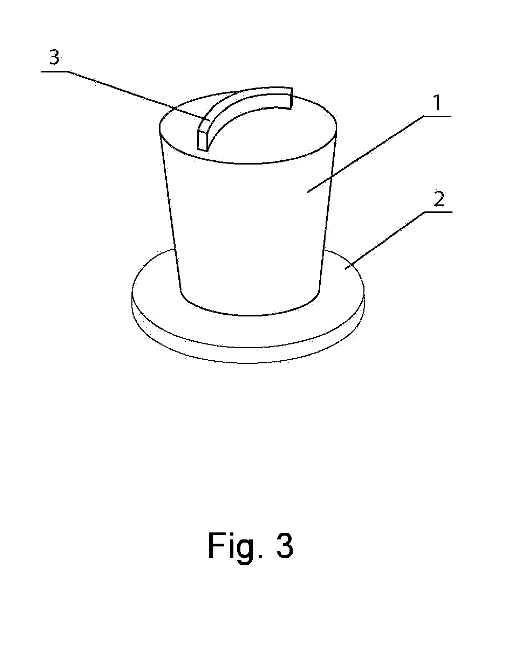

In the third variant of the spike (Fig. 3), the same as in the second variant, only the plate of tip 3 is made from a hard-alloyed material. Housing 1 of the spike is made in the form of a rod of any acceptable shape, e.g. cylindrical, faceted, combined. The rod can have a cross-section being variable over the height, i.e. be divergent, convergent, have radial protrusions, in particular, in the form of flat rings (flanges), have fillets on the lateral surface, etc. The tip plate is fixed at the housing end with partial deepening inside the housing. Generally, the plate has the arc-shaped cross-section, i.e. have the shape of an ellipsoidal cylinder. It is preferable that the plate arc should have a radial shape, i.e. the plate surface is the surface of a cylindrical sector.

The tip shape mainly determined the strength properties of the spike, the coefficient of traction with the pavement and the coefficient of sliding friction during braking. Unlike the prototype, in which the tip is made in the form of a flat plate, in the invention being claimed (in all three variants) the tip shape is identical to the longitudinal cut of a tube. The tubular shape has higher stiffness and can withstand a higher bending moment until breakdown (shear) than a flat plate. It determines higher strength properties of the spike in case of impact loads being suffered during braking with locked wheels.

The second advantage, which have the spikes with the tip plate being bent in the form of an arc as described above, is a higher coefficient of traction with the pavement. It can be explained by the fact that the area of tip contact is limited by the arc itself and the chord connecting its ends, which is significantly larger than with a straight plate, for which the contact area is determined by the cross-sectional area (stretched rectangle).

The subject matter of the invention is also a vehicle tyre provided with anti-skid spikes, which have a housing with a flange and a hard-alloyed tip made in the form of a plate. The spikes can correspond to one of the variants described above. A distinctive feature of the spike for the inventive tyre is the fact that its tip has the shape of plate being bent in the transverse direction - either in the form of an arc, or, which is preferable, radially. The tyre being provided with such spikes have the advantages described above.

However an important factor determining the tyre reliability is not only the spike implementation shape, in particular, that of its tip, but also the tip orientation on the tread surface.

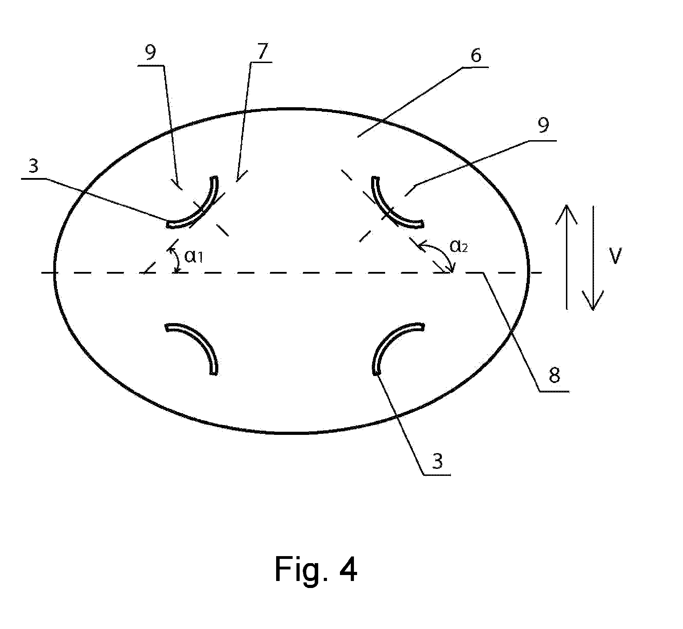

According to the present invention, the spikes in the tread of tyre 6 are installed so that in the tip cross section the tangent 7 to plate 3 of the tip passing via the arc flexibility point is orientated at an angle **a** to the plane (the plane trace is denoted in Fig. 4, reference 8, **V** is the speed vector) being perpendicular to the axis of symmetry of the tyre, and this angle **a** lies within the range from 5° to 175°. It is preferable that the angle should be equal to the following values: **a₁**=45° or **a₂**=135°. In case when the tip plate cross-section contains, for example, an axisymmetrical radial arc, all mentioned above will be valid for the tangent being perpendicular to the longitudinal plane of symmetry (the plane trace is denotes as the reference of 9) of the tip plate. At the tip plate orientation angles being claimed, the braking with locked wheels is the most effective.

As described above, the width **L** of the front of influence during braking with full-lock skidding and, consequently, the braking effectiveness will be determined by the tip orientation with respect to the direction of motion and for a flat plate it fluctuates from the plate width value to the minimal value, i.e. the plate thickness. In other words, situations are possible, at which the spike with a flat tip plate is ineffective during braking.

According to the present invention, the tip plate is bent in the transverse direction. Using such a construction, the maximal width **Lₘₐₓ** of the front is determined by the length of chord connecting the arc ends in the plate cross-section, the minimal width **Lₘᵢₙ** of the front is determined by the length of perpendicular from the chord to the arc flexibility point. So in this construction, no matter how the plate may be oriented with respect to the movement vector **V**, the width **L** of the front of influence varies insignificantly, at least it does not degenerate into the plate thickness value.

Thus, the modification of the spike construction enhances the reliability and safety of vehicle operation in the winter time, in case when there are an ice crust or rolled snow on the roads. It is achieved by modification of the construction, which enhances the spike strength, increases the coefficient of traction with the road pavement (reduces wheel skidding on ice) as well as increases the coefficient of sliding friction during braking with locked wheels (reduces the braking path).

## Claims

1. An anti-skid spike for a vehicle tyre, comprising: a housing (1) with a flange (2), and a tip (3) made in the form of plate,
**characterised in that**
the housing (1) and the tip (3) are made as a single whole from a hard-alloyed material; wherein at least the tip (3) has the arc-shaped cross-section.

2. The spike of claim 1, **characterised in that** the tip (3) and the housing (1) form a single whole plate having the arc-shaped cross-section.

3. The spike of claims 1 or 2, **characterised in that** the plate cross-section arc is radial.

4. An anti-skid spike for a vehicle tyre, comprising: a housing (1) with a flange (2), and a hard-alloyed tip (3) made in the form of a plate,
**characterised in that**
the housing (1), at least in the upper part, is made flattened, hollow and has a closed convex-concave figure in its cross-section; wherein the tip (3) has the shape of a bent plate with the cross-section corresponding to the housing cavity cross-section and is fixed at the housing end with partial deepening into the above-mentioned cavity.

5. The spike of claim 4, **characterised in that** the two opposite sides of the figure being formed by the cross-section of the upper part of the housing (1) are concentric radial arcs.

6. An anti-skid spike for a vehicle tyre, comprising: a flange (2), a housing (1) having the form of a rod, and a hard-alloyed tip (3) made in the form of a plate,
**characterised in that**
the tip (3) has the arc-shaped cross-section; wherein the tip (3) is fixed at the housing end with partial deepening inside the housing (1).

7. The spike of claim 6, **characterised in that** the plate cross-section arc is radial.

8. The spike of claim 6, **characterised in that** the housing (1) has a cross-section being variable over the height.

9. The spike of claim 7, **characterised in that** the housing (1) has a cross-section being variable over the height.

10. A vehicle tyre (6) provided with anti-skid spikes, each of which has a housing (1) with a flange (2), and a hard-alloyed tip (3) made in the form of a plate,
**characterised in that**
at least the tip (3) has the arc-shaped cross-section.

11. The tyre of claim 10, **characterised in that** the plate cross section arc is radial.

12. The tyre of claim 10, **characterised in that** the spikes are installed so that the tangent (7) to the tip plate being perpendicular to the longitudinal plane of symmetry of the tip plate is orientated at an angle to the plane being perpendicular to the axis of symmetry of the tyre and this angle lies within the range of 5°-175°.

13. The tyre of claim 11, **characterised in that** spikes are installed so that the tangent (7) to the tip plate being perpendicular to the longitudinal plane of symmetry of the tip plate is orientated at an angle to the plane being perpendicular to the axis of symmetry of the tyre and this angle lies within the range of 5°-175°.

14. The tyre of claim 13, **characterised in that** the angle equals to 45° or 135°.
